# EUROPEAN PATENT APPLICATION

(11) **EP 0 868 955 A1**
(43) Date of publication of application: **07.10.1998**
(21) Application number: 98101267.7
(22) Date of filing: 26.01.1998
(51) Int. Cl.: B22F 3/105, B22F 3/11, B29C 33/38

(54) **Method of producing tyres, of making vulcanization moulds for said tyres, tyres and moulds thus produced**

(30) Priority: 29.01.1997 IT MI970160
(71) Applicant: PIRELLI COORDINAMENTO PNEUMATICI S.p.A., 20126 Milano (IT)
(72) Inventor: Caretta, Renato, 21013 Gallarate (VA) (IT); Mancosu, Federico, 20135 Milan (IT)
(74) Representative: Giannesi, Pier Giovanni

(57) **Abstract**

Mould parts of a mould for vehicle tyres, such as sector matrices in a centripetal mould, are made by sintering of a metal- or ceramic-based powder (3) cyclically deposited in consecutively superposed layers. Deposition of each layer is followed by sintering of the powder by a laser beam (8) moving within previously defined areas delimiting contours of the sintered laminate portion thus obtained. Movement of the laser beam (8) is managed by a programmable electronic control unit (11) in which digital information defining the three-dimensional graphic representation of the mould portion to be obtained is stored. The digital information is processed for dividing the graphic representation into superposed layers corresponding each to one of the laminate portions to be obtained by sintering of the corresponding powder layer. Thus moulds of sintered material are obtained, which are provided with inner microcavities enabling air ejection during the tyre vulcanization.

## Description

The present invention relates to a method of moulding and vulcanizing tyres for vehicles, to the mould for carrying out said method and the tyre thus vulcanized.

The invention also relates to a method of making vulcanization moulds for vehicle tyres, said moulds being of the type comprising inner walls provided with surface projections and/or cavities adapted to define corresponding cavities and/or projections on a tyre being worked.

It is known that moulds used for vulcanization of vehicle tyres are usually comprised of a pair of so-called cheeks, of annular conformation, in coaxial opposition with each other, adapted to operate at the tyre sidewalls, as well as a plurality of circumferentially-distributed sectors arranged to operate on the tyre tread band to define a so-called tread pattern thereon, generally formed of mutually-intercalated longitudinal and transverse grooves so as to define respective land portions and/or blocks.

For the purpose of defining said tread pattern, the mould sectors must be provided, on their inner surfaces intended for getting into contact with the tread band, with a great number of surface projections crossing each other according to modalities varying each time, depending on the operational requirements to be obtained.
Usually, these surface projections are formed on so-called "matrices", i.e. interchangeable plate-like metal elements applied to the interior of the respective sectors.

With reference to the cheeks, taking into account the fact that raised portions are likely to be created on the tyre sidewalls for defining a graphical identification of the tyre for example (trademark, tyre size or other specifications), said cheeks are to be provided with corresponding cavities adapted to generate said raised portions.

A problem of particular importance connected with the tyre moulding is to ensure evacuation of the air entrapped between the mould and carcass during the mould closure; if not, the air built up inside the mould can cause an uneven rubber distribution on the carcass, also generating formation of bubbles on the tyre surface, which would seriously impair both the aesthetic appearance and quality of the vulcanized tyre.

For the purpose, many holes of small diameter usually defined as "vents" or "venting channels" are formed in the mould walls by machine tools, which vents are distributed following different modalities over the whole mould surface, both at the tread and at the cheeks and are adapted to enable a complete air ejection from the interior of the mould during the tyre moulding cycle.

However, the presence of these vents gives rise to several different problems. Firstly, due to the size of said holes that cannot fall beyond given limits imposed by the features of the tools used for making them, penetration of rubber, made fluid by vulcanization heat, is enabled, so that the vulcanized tyre is covered with unaesthetic rubber stems, hereinafter referred to as "sprues", that are usually eliminated before the tyre commercialization, which will involve a further working and consequent increase in costs.

In addition, which is not of less importance, it is very difficult to make holes opening into very critical areas for air-ejection purposes, at the surfaces of a curved outline for example, such as the base of the surface projections in matrices, or at the crossing areas of the projections.

For accomplishment of surface projections on matrices and appropriate seatings for housing the well-known narrow lamellae, long material-removal workings involving use of numerical-control machine tools are required and several drawbacks are involved.

Actually, in these machine tools for setting of the matrix working cycle, a long programming work is required which aims at defining and optimizing the path to be covered by tools for making the matrix itself, based on the interpretation of the plan drawings. On defining the path to be followed by the tools, selection of compromise and/or makeshift solutions is very often required when, for technical reasons that are likely to depend on the construction and operating features of a given machine tool, it is impossible or in any case too much difficult to obtain particular geometrical features reproduced in the plan drawings. For selection of alternative solutions usually the staff assigned to programming of the machine tools is required to ask for advice the staff responsible of the tread pattern planning.

It should be also noted that, since definition of the tool path is influenced both by the machine tool type to be used and the experience and skill of the staff assigned to programming of same, moulds made on different machine tools, although based on the same construction drawings, are likely to give rise to tyres that are not perfectly similar in terms of geometric and/or qualitative features.

In addition to the foregoing it is also to note that, in accordance with the known art, the vulcanization mould of a tyre must possess particular features of mechanical strength.

Actually, in order to ensure mould closure against the action of moulding and vulcanization pressures, the different mould parts are tightly locked together at high pressures, in the order of 28 kg/cm². At the same time, the mould must bear high vulcanization temperatures, usually in the order of 150°C - 180°C, applied over periods of 15 - 20 minutes. Finally, the mould must as much as possible withstand wear produced by repeated opening and closing cycles, as well as mounting and dismantling cycles, and the periodic cleansing operations. Practically, usual moulds normally carry out at least as much as 150,000 vulcanization cycles, before becoming useless or obsolete.

Initially, the applicant was on the lookout for a simpler manner to make moulds provided with holes adapted to enable a complete air ejection from the interior of the mould during the tyre moulding step.

In accordance with the invention, the applicant has envisaged the possibility of forming the mould, or part thereof, using as the starting material a powder capable of being sintered (in the following "sinterable powder") which is deposited in superposed successive layers, in each of which the powder is sintered in the space delimited by a predetermined contour, by a laser beam or other localized-heating means managed by an electronic control unit. It has been found that, by so doing, it is possible to make moulds provided with vents or venting channels in a simplified manner and with a strict control on the position and geometric sizes of said channels that can be made as thin as wished: in particular, said channels can be made without any additional difficulty also at surfaces of complicated outline or at particularly critical mould areas.

The applicant has also found that the powder particles, bonded together by sintering at the points of mutual contact, leave small intercommunicating cavities between each other, the sizes of which are determined by control of the powder particle size: these microcavities do not enable entry of the rubber but they offer a sufficient perviousness to air, capable of allowing an easy ejection of same through the mould wall, for the purpose of using them in tyre manufacturing, thereby avoiding resorting to provision of usual venting channels, as required in the traditional methods.

Thus, the problem represented by the known and already mentioned rubber sprues present in the vulcanized tyre is completely eliminated.

Finally, it has been surprisingly found that the use of moulds for tyres obtained by sintered powders, and therefore devoid of the solidity and duration features typical of conventional tyres, in the process for tyre vulcanization, does not represent a hindrance to the manufacture of tyres either in small stocks or mass-produced.

In a first aspect the invention relates to a method of making tyres for vehicle wheels by a vulcanization mould comprising inner walls provided with surface projections and/or cavities adapted to define corresponding cavities and/or projections on a tyre being worked, characterized by the use of a mould in which the material forming at least part of said inner walls consists of a sintered powder, and in particular a mould without any air vents, so as to make tyres devoid of sprues.

In a second aspect, the invention relates to a method of making vulcanization moulds for vehicle tyres, comprising the following steps: depositing a layer of sinterable powder; submitting the powder layer to localized-heating means to determine powder sintering at the points concerned with the action of said localized-heating means; moving the localized-heating means on the powder layer in at least one movement area delimited by a predetermined periphery, to give rise to at least one sintered laminate portion: cyclically repeating the above listed sequence of steps to form at least part of said mould by a plurality of sintered laminate portions consecutively superposed and each delimited by a respective periphery.
Preferably, said localized-heating means comprises at least one laser beam.

The movement areas of said localized-heating means are advantageously defined by digital information obtained through data programming and processing by a computer, said programming being carried out in the following steps: defining a three-dimensional graphic representation of the mould portion to be made; dividing said graphic representation into a plurality of superposed layers of predetermined thickness, each corresponding to one of said sintered laminate portions to be created by movement of the localized-heating means on the sinterable powder layer, movement of the localized-heating means being carried out upon command of an electronic control unit in which said digital information has been previously stored.

Advantageously, the method may be conducted in such a manner that, following sintering, the sinterable powder particles are mutually joined leaving cavities intercommunicating with each other between each particle and the adjacent ones.

In accordance with a preferential embodiment of the invention, thickness of each of said layers is included between 0.2 mm and 0.5 mm, and the sinterable powder has a particle size included between 30 µ and 100 µ.

In a possible alternative embodiment of the invention, the sinterable powder consists of ceramic-based material offering the advantage of making available a tyre vulcanization method for vehicle wheels comprising a step of supplying heat to the interior of a mould, carried out by microwaves and in different amounts at different areas of the tyre to be vulcanized.

In a further aspect, the present invention also relates to a mould obtained by the above described method. This vulcanization mould for tyres is characterized in that the material forming at least part of said inner walls consists of a sintered powder.

In more detail, the sintered powder forming said inner walls has particles mutually bonded at respective junction points and alternated with mutually intercommunicating cavities.

In a preferential embodiment, the mould has lamelliform projections of sintered material joined in one piece to the inner walls of the mould itself, said lamelliform projections being likely to have thickness variations in their transverse section.

The mould may be also provided with air vents or venting channels opening in an original manner also at critical surface areas, such as the surface projection base of the matrices or the crossing areas in said projections.

The inner walls of the mould can be advantageously provided with a surface debossing.

In another aspect, the present invention relates to a vulcanization mould for vehicle tyres characterized in that it comprises a plurality of small cavities intercommunicating with each other and adapted to enable air ejection from the mould during the vulcanization cycle.

In one of its different aspects, the present invention also relates to a tyre for vehicle wheels, which is vulcanized in a vulcanization mould comprising inner walls adapted to define an outer surface of said tyre being worked, wherein the material forming at least part of said inner walls consists of a sintered powder.

Preferably the outer surface portion defined by said part of the inner walls formed of a sintered powder comprises the surface of said tread band.

Further features and advantages will become more apparent from the detailed description of a preferred but non-exclusive embodiment of a method of making vulcanization moulds for motor-vehicle tyres, in accordance with the present invention. Such description will be given hereinafter with reference to the accompanying drawings, by way of non-limiting example, in which:
- Fig. 1 shows schematically in a diagrammatic sectional view, an apparatus used to make parts of a mould in accordance with the present invention;
- Fig. 2 is a front view, given just as an indication, of an inner surface of a matrix of a mould for vehicle tyres, feasible by the method of the present invention;
- fig. 3 is an enlarged perspective view of the matrix portion corresponding to area "N" in Fig. 2;
- Fig. 4 is an enlarged and broken off section of a portion of the mould matrix, executed orthogonally to the development plane of Fig. 2;
- Fig. 5 shows a tyre cut, made by a mould according to the invention, devoid of air vents;
- Fig. 6 is a greatly enlarged perspective view of the matrix portion in Fig. 3, showing a limited portion of a sintered powder layer in detail.

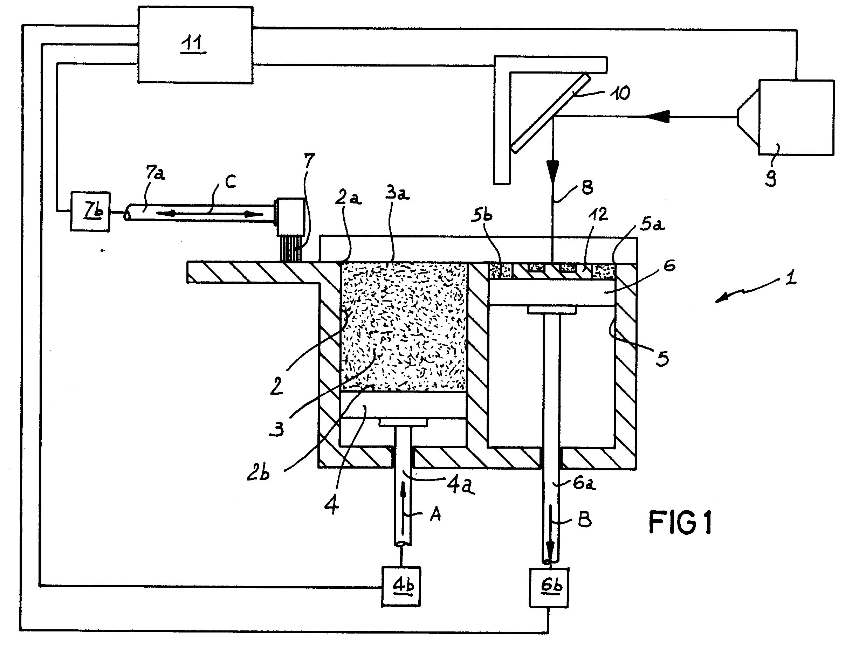

With reference to Fig. 1, an apparatus for making vulcanization moulds in particular for vehicle tyres, in accordance with a method being the object of the present invention has been generally identified by reference numeral 1.

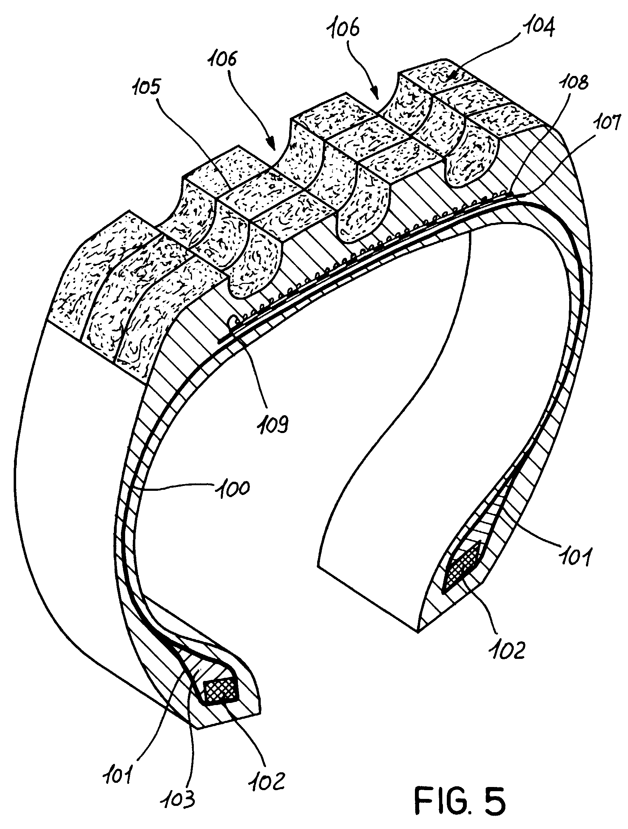

It is to note that tyres produced by the method and the mould of the invention are usual tyres of the traditional type, commonly known to technicians: they comprise (Fig. 5) a radial-ply or cross-ply carcass, of toroidal conformation, comprising a strong structure formed of at least one ply 100 of rubberized fabric, having its ends 101 turned up each about an anchoring core 102 which is provided, at the radially outer surface thereof, with a rubber filling 103. Preferably the turned up flaps of the carcass ply radially extend outwardly along at least part of the side of said filling.

As known, the tyre area comprising the bead-core and filling forms the tyre bead intended for anchoring the tyre to a corresponding mounting rim, not shown.

Disposed on the carcass in known manner is a tread band 104, provided with a raised pattern defined by cuts 105 and grooves 106 formed in the band thickness, said tread being adapted for rolling contact of the tyre on the ground.

These tyres may also comprise a belt structure disposed crownwise to the carcass, interposed between the carcass and tread band, substantially extending from one tyre sidewall to the other sidewall, that is as wide as the tread band, comprising at least two radially superposed layers 107 and 108 of reinforcing cords, preferably of metal material, parallel to each other in each layer and in crossed relationship with those of the adjacent layer relative to the equatorial plane of the tyre, and preferably also a radially outermost layer of reinforcing cords oriented at 0°, that is in a circumferential direction. Commonly known are variants to the above described structure for specific uses of the tyre and they can also be applied to the tyres of the invention.

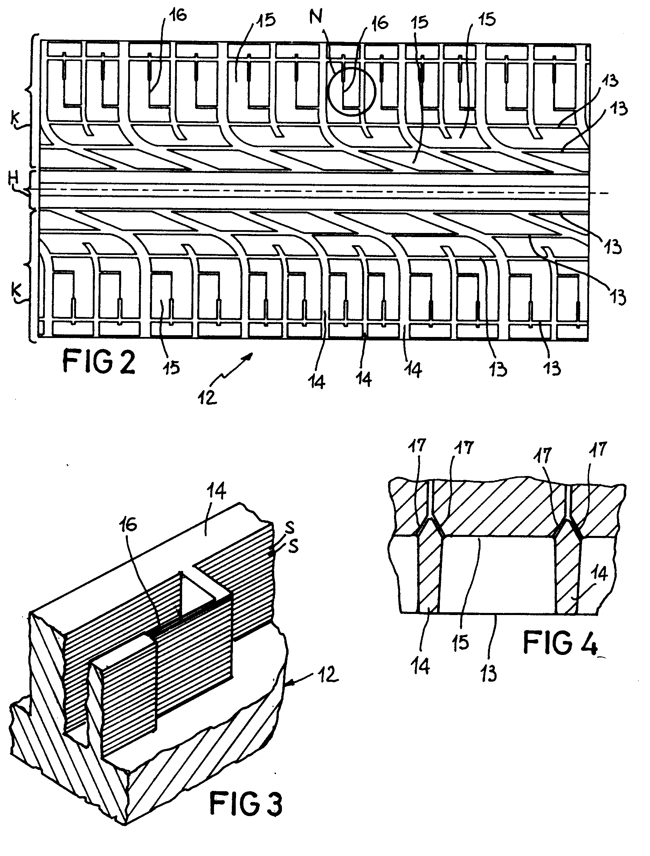

In particular, the tyre produced with the prototype mould in accordance with the invention is a tyre for car having a radial-ply carcass, size 225/55R16, of traditional structure, provided with the tread pattern shown in Fig. 2, being the object of the Italian patent application No. MI931119 of May 31, 1993 to which please refer for details, if needed.

Apparatus 1 is not part of the present invention and is therefore described only as regards its essential components. Therefore, apparatus 1 as such is known per se and already employed in other technological fields, mainly to make models and/or prototypes of machine parts. By way of example, apparatuses of the type to be used for putting the method in reference into practice are commercialized by firms "3D" and "EOS".

After the above statements, it is pointed out that apparatus 1 comprises a holding chamber 2 filled with a sinterable powder 3, metal material of a particle size included between 30 µ and 100 µ, preferably in the order of 40 µ, for example. Powders adapted for use are for example available from "Elettrolux". The holding chamber 2 has an open side 2a from which the upper surface 3a of the sinterable powder mass 3 emerges. On its side opposite to the open side 2a, the holding chamber 2 has a bottom wall 2b formed of a lifting plate 4 axially slidable in the holding chamber towards the open side 2a of the latter. The lifting plate 4 through a rod 4a is subjected to the action of movement means 4b only diagrammatically shown, to be activated for making the lifting plate carry out a short displacement towards the open side 2a of the holding chamber 2, as shown by arrow "A".

Arranged beside the holding chamber 2 is a collecting chamber 5 provided with a respective open side 5a substantially coplanar with the open side 2a of the holding chamber itself. The collecting chamber 5 has a corresponding bottom wall 5b consisting of a supporting plate 6 axially slidable within the chamber. Through a respective drive rod 6a, the supporting plate 6 is subjected to the action of respective movement means 6b to be activated to give the plate a short displacement away from the open side 5a of the collecting chamber 5, as shown by arrow "B".

Apparatus 1 further comprises a distribution doctor blade 7 substantially operating in the lying plane of the open sides 2a, 5a of the holding and collecting chambers, 2 and 5 respectively.

Upon the action of drive means 7b operating on a connection rod 7a, the distribution doctor blade 7 is operated with a reciprocating motion so as to pass over the holding and collecting chambers, 2 and 5, at their open sides 2a and 5a, as shown by arrow "C". Further operating at the open side 5a of the collecting chamber 5 is localized-heating means preferably consisting of at least one laser beam 8 produced by an emitting source 9 and deviated to the connecting chamber by a mirror 10 or equivalent optical-deviation means.

During operation of apparatus 1, the lifting plate 4 is moved over a given length towards the open side 2a of the holding chamber 2 so as to slightly raise the upper surface 3a of the sinterable powder mass 3 relative to the lying plane of the open side itself. Simultaneously, the supporting plate 6 is moved away from the open side 5a of the collecting chamber 5 over a length corresponding to the displacement carried out by the lifting plate 4.

Following one reciprocating-movement cycle of the distribution doctor blade 7, the sinterable powder 3 emerging from the lying plane of the open side 2a is transferred to the collecting chamber 5 and deposited therein so as to form a layer of predetermined thickness on the bottom surface 5b defined by plate 6 or the powder layer or layers previously deposited in said collecting chamber.

The sinterable powder layer deposited in the collecting chamber 5 as above described is then submitted to the laser beam 8 action which is capable of causing localized sintering of the powder at the point impinged on by the beam itself.

Upon the action of movement means (not shown) operating on mirror 10, the laser beam 8 is set in motion on the powder layer deposited in the collecting chamber 5, within at least one movement area delimited by a given periphery.

Movement of mirror 10, and therefore of the laser beam 8, is managed by a programmable electronic control unit 11 that advantageously may also oversee operation of all actuators 4b, 6b, 7b provided in apparatus 1, as well as of the emitting unit 9.

The powder particles 3 impinged on by laser beam 8 in the above mentioned movement area or areas are mutually bonded at the points of mutual contact, thereby giving rise to one or more sintered laminate portions of solid structure. Thickness of each sintered laminate portion substantially corresponds to the thickness of the previously deposited powder layer, whereas contours of same coincide with the periphery of the corresponding movement area of laser beam 8.

Thicknesses of the powder layers subsequently deposited, and therefore the sintered laminate portions consequently obtained, can be varied by modifying the amount of the displacement carried out by plates 4 and 6 before passage of doctor blade 7, and they are selected depending on the power of the available laser beam 8 and the geometric and size precision that is required to be obtained on the mould during the manufacturing step.

In a preferential solution, the thickness of each of the deposited powder layers is preferably included between 0.2 and 0.5 mm and more preferably 0.3 mm.

Advantageously, by cyclically repeating the above described operating cycle with reference to deposition of one sinterable powder layer 3 and sintering of same at the movement areas of the laser beam 8, a plurality of sintered laminate portions consecutively superposed and mutually joined to form a vulcanization mould, or preferably, a desired mould part, are easily obtained.

In accordance with the method of the present invention, the movement areas of the laser beam 8 on the sinterable powder layers deposited in succession are essentially defined by digital information stored in the electronic control unit 11. This digital information is obtained, with the aid of a computer, by programming and processing data substantially in the following two steps.

A first step essentially consists in defining a graphic three-dimensional representation of the mould portion to be made. Advantageously, this step can be directly achieved within the mould planning scope on a computer having a planning program of the type commonly referred to as "C.A.D.".

This graphic representation is then divided into a plurality of superposed layers of given thickness, corresponding to, or in any case correlated with the thickness of the sinterable powder layers to be deposited in the collecting chamber 5 and, consequently, the layer of the laminate portions formed upon the action of the laser beam 8.

Advantageously, division of the graphic representation in the above described manner can be directly carried out by the electronic control unit 11 by processing of digital information defining the graphic representation itself. This digital information can be inputted to the control unit 11, either by loading of a file from a common magnetic or optical medium for example, or directly through interconnection of the electronic control unit 11 with a terminal in which the above digital information has been previously processed and/or stored.

Fig. 2 shows a mould portion made by the method in question and represents one of the eight matrices 12 in front view, each of said matrices being mounted on the corresponding sector of a centripetal mould which, in known manner, comprises said annular arrangement of eight sectors for moulding of the tread band and two axially opposite cheeks operating at the tyre sidewalls. Fig. 5, in a different aspect of the two tyre surfaces, shows the usual separation line between cheek and sectors. As can be easily viewed from Fig. 2, said matrix 12 has longitudinal projections 13 directed parallelly to the circumferential extension of the tyre and alternately arranged with transverse projections 14 for delimiting corresponding cavities 15 intended to form corresponding blocks on the tyre tread band. Also arranged in said cavities 15 are lamelliform projections 16 of limited thickness, more commonly called "lamellae", arranged to define corresponding cuts of reduced width or "narrow cuts" in the tyre blocks.

Fig. 3, showing an enlarged perspective view of the matrix portions corresponding to area "N" in Fig. 2, depicts division of the graphic representation into superposed layers "S", each corresponding to one of the obtained sintered laminate portions.

In the above description it is apparent that the method in reference enables any mould part of whatever structural complexity to be made in a much shorter period of time and at much more reduced prices than when traditional working methods on the machine tool are adopted: in particular, in the light of the above, the method in reference lends itself to be adopted in a particularly advantageous manner to make mould matrices the geometric configuration of which is made particularly complicated due to the presence of the great number of projections 13, 14.

It is particularly to note that the execution time of the concerned mould part practically is not adversely affected by the structural complexity of same.

Actually, simultaneous accomplishment of all projections inclusive of lamellae 16 can be achieved by deposition of successive layers of sinterable powder, alternated with the laser beam 8 action.

If at least on one tyre sidewall accomplishment of at least one raised portion is wished, which will for example define a graphic element for tyre identification (trademark, tyre size or other indications), a corresponding cavity will be generated in a portion of one of the inner mould walls formed of sintered powder.

The method is particularly advantageous when said identification elements on the tyre are not wished to be made as projections, but as depressions or cavities in the tyre sidewall thickness: in this case raised elements are required to be arranged on the corresponding mould walls, instead of the usual cavities, and this solution cannot be proposed when known methodologies are adopted, due to the high manufacturing cost.

Should the geometric configuration of matrix 12 exhibit surface portions that can be easily obtained by working on the machine tool as well, prevision may be made for making given matrix parts alone with the method in question.

By way of example, in the solution shown in Fig. 2, the central matrix part denoted by "H", as well as the mould cheeks, have been made by working on a machine tool, whereas the side portions "K" of complicated geometric conformation have been more conveniently obtained by the method of the invention.

As above described, the method in question, in addition, achieves direct programming of apparatus 1 for making moulds by mere data loading in the electronic control unit 11, thereby eliminating the long interventions required in the known art for defining the path to be followed by tools, based on interpretation of drawings supplied by the planning departments.

It is farther to note that the present invention also enables different unexpected advantages to be achieved in the obtained moulds or parts thereof.

During a moulding and vulcanization sampling of a prototype tyre a sintered mould devoid of air vents or venting channels has been experimented.

To the ends of the present description by "air vent" or "venting channel" it is intended an opening crossing the mould through the whole thickness of same following a substantially straight direction.

At the end of vulcanization, after drawing the tyre from the mould, it has been seen that the achieved tyre did not exhibit any unevenness typical of tyres vulcanized by means of conventional moulds devoid of air vents, while, on the other hand, being free from sprues.

The applicant has intuitively understood that as a result of sintering, the powder particles, after being bonded together in a stable manner at the mutual-contact points, left small cavities communicating with each other, although closed to rubber penetration, between each particle and particles adjacent thereto. The applicant has found that the width of these microcavities can be easily imposed, in relation to the viscosity features of the blend used for the tyre tread and sidewalls for example, by suitably selecting within the values pointed out above, the particle size of the powder used for mould construction.

In this manner, said intercommunicating cavities closed to blend penetration, do offer a sufficient perviousness to air, capable of enabling an easy air ejection through the matrix or another corresponding mould wall, during the tyre vulcanization cycle, without resorting to usual air vents as required in known methods.

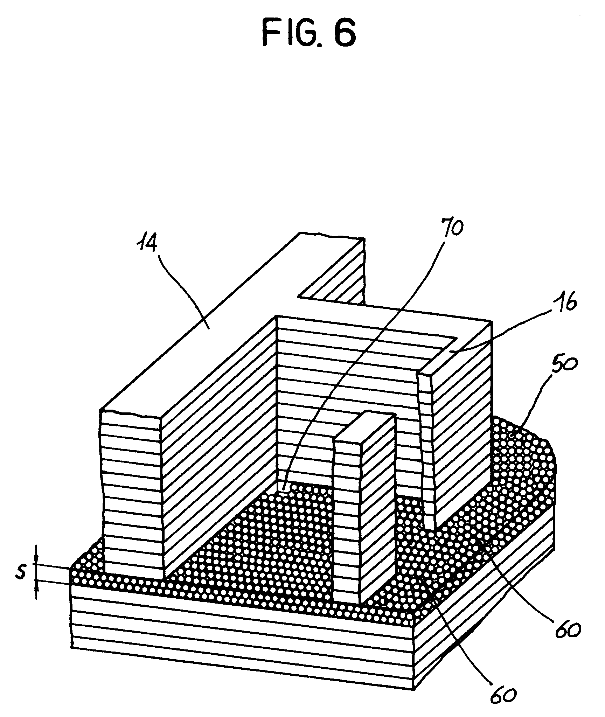

In this connection, Fig. 6 shows a very enlarged detail of the part shown in Fig. 3, only emphasizing a sintered laminate layer; on the other hand, all matrices of the prototype mould have been made individually, following the method described with reference to Figs. 1 and 2 and employing the already mentioned apparatus available from "EOS" as the sintering apparatus, with a laser beam having a 30 watt power, and a powder made of a copper-, aluminium- and iron-based metal material as the sintering powder, the particle size of which is in the order of 40 µ and which is available from Elettrolux.

Looking at this detail, a plurality of powder particles 50 bonded together at their contact points can be seen. One can also notice the corresponding plurality of microcavities 60 that particles form between each other, due to a substantial particle sphericity.

It is now apparent why by an appropriate selection of the particle sizes, it is possible to control the width of these microcavities in such a manner that their geometrical size, in relation to the blend viscosity, is, on the one hand, sufficiently large to enable an easy air escape during the vulcanization step and, on the other hand, sufficiently small to limit rubber penetration.

It is in any case to note that the method in reference enables said air vents, in particular of cylindrical form, to be obtained, if required, with sizes (the diameter in particular) of the desired value, without any additional working or any increase in the working times being required.

In particular, the obtained mould may be also provided with air venting channels 17 that, as exemplified in Fig. 4, open at critical surfaces on the inner mould walls. This possibility appears to be particularly advantageous for achieving air venting channels 17 perimetrically converging on the cavity 15 bottom such as channel 70 in Fig. 6, placed at the crossing between the rib 14 and lamella 16, that is at particularly critical areas to the end of air ejection.

By the methods of mechanical material removal hitherto used, this result cannot be achieved, or can be achieved in a very slow and difficult manner.

Preferably, the diameter of the venting channels 17 made in accordance with the invention does not exceed 0.5 mm.

Preferably, in order to further limit the mould possibility of being penetrated by rubber without limiting the microcavity sizes too much, the venting channel consisting of a series of radially adjacent microcavities 60 can have a non rectilinear course.

The mould made in accordance with the invention advantageously lends itself to give desired aesthetic and/or operational features to the produced tyres, such as debossing of the outer surface, for example.

The surface roughness that can be given to the mould by powder sintering promotes a possible treatment of the inner mould surfaces by application of polymeric coatings, aiming at promoting flowing of air to the venting channels for example, and/or facilitating separation of the tyre on opening of the mould.

In accordance with a possible alternative embodiment of the invention, sinterable powders of a ceramic-based material may be employed.

The moulds of sintered ceramic material that can thus be obtained make it possible to carry out tyre vulcanization by heat supply through microwaves, instead of by steam as commonly used in present vulcanization processes. It is to note that vulcanization by microwaves offers the great advantage over the use of steam, of being able to differentiate heat supply from one tyre area to another depending on specific requirements. Advantageously, during vulcanization the heat amount supplied to the tyre bead area will be greater than that supplied to the belt/tread area, which in turn will be greater than that supplied to the sidewall area, depending for example on the specific thickness of the tyre wall at the three different areas.

In an original manner and advantageously, the mould made in accordance with the present invention may be provided with lamellae 16 formed in one piece with the remaining parts of the mould and in case of need having thickness variations in their transverse section.

Due to the possible above procedure for making these lamellae, not only costs necessary in the known art for manufacturing and engaging the individual lamellae at the mould interior are eliminated, but also particular operational features in the tyres can be obtained, by arrangement of undercuts or other particular geometric configurations for the narrow cuts, as well as for the longitudinal and transverse grooves, formed in the tyres themselves.

It is to note that the important reduction in costs achieved by the present invention in the field of mould production makes it convenient to employ moulds thus made also for producing small tyre stocks, or even for making prototype tyres when new tread patterns are to be studied and planned. Actually, manufacture of the mould by the method in question appears to be economically advantageous even with respect to the present techniques for making prototype tyres, in which use is made of skilled manpower for manually forming cuts and grooves for the pattern being defined on the tread band.

In addition, for reducing the environmental impact of this technology and achieving a further advantage on the production costs, it is important to note that the mould, once the production cycle has been completed, can be converted to powder again. This is obtained by crushing the mould, that is the sintered powder parts, by a grinding operation following known methods and means. The powder thus obtained can be used again without difficulty for production of a new mould.

Obviously, a person skilled in the art, after understanding the invention as above described, will be able to carry out modifications, variations and replacements of the variables associated with the present invention for the purpose of meeting specific and contingent application requirements according to all needs.

In particular, the method of the invention lends itself to be also applied to moulds for tyres of the type made of two halves, or in any case different from the centripetal type cited in the course of the present description.

## Claims

1. A method of making vulcanization moulds in particular for vehicle tyres, comprising the following steps:
- depositing a layer of sinterable powder (3);
- submitting the powder layer (3) to localized-heating means (8) to determine powder sintering at the points concerned with the action of said localized-heating means (8);
- moving the localized-heating means (8) on the powder layer (3) over at least one movement area delimited by a predetermined periphery, to give rise to at least one sintered laminate portion;
- cyclically repeating the above listed step sequence to form at least part (12) of said mould by a plurality of sintered laminate portions consecutively superposed and each delimited by a respective periphery.

2. A method as claimed in claim 1, characterized in that the movement areas of said localized-heating means are defined by digital information obtained through data programming and data processing by a computer.

3. A method as claimed in claim 2, characterized in that said programming is carried out in the following steps:
- defining a three-dimensional graphic representation of the mould portion (12) to be made;
- dividing said graphic representation into a plurality of superposed layers ("S") of predetermined thickness, each corresponding to one of said sintered laminate portions to be created by movement of the localized-heating means (8) on the sinterable powder layer (3),
movement of the localized-heating means (8) being carried out upon command of an electronic control unit (11) in which said digital information is stored.

4. A method according to claim 2, characterized in that following sintering, the sinterable powder particles are mutually joined leaving cavities intercommunicating with each other between each particle and the adjacent ones.

5. A method according to claim 1, characterized in that thickness of each of said layers ("S") is included between 0.2 mm and 0.5 mm.

6. A method according to claim 1, characterized in that the sinterable powder (3) has a particle size included between 30 µ and 100 µ.

7. A method according to claim 1, characterized in that the sinterable powder consists of a ceramic-based material.

8. A method according to claim 1, characterized in that said localized-heating means comprises at least one laser beam (8).

9. A vulcanization mould for vehicle tyres, comprising inner walls provided with surface projections (13, 14) adapted to define cuts and grooves in a tyre being worked, characterized in that the material forming at least part of said inner walls consists of a sintered powder.

10. A mould according to claim 9, characterized in that the sintered powder forming said inner walls has particles mutually bonded (50) at respective junction points and alternated with mutually intercommunicating cavities (60).

11. A mould according to claim 9, characterized in that it has lamelliform projections (16) of sintered material integral with the inner walls of the mould.

12. A mould according to claim 11, characterized in that said lamelliform projections (16) have thickness variations in their transverse section.

13. A mould according to claim 9, characterized in that it is provided with air vents or venting channels (17) opening at the base of surface projections on the inner walls of the mould.

14. A mould according to claim 9, characterized in that said inner walls have at least one surface debossing.

15. A vulcanization mould for vehicle tyres characterized in that it comprises a plurality of small cavities intercommunicating with each other and adapted to enable air ejection from the mould during the vulcanization cycle.

16. A mould according to claim 15, characterized in that it comprises further air venting channels (17), preferably opening at curved surfaces on the inner walls of the mould.

17. A tyre for vehicle wheels, comprising a carcass of toroidal conformation, a pair of axially opposite sidewalls terminating with beads, adapted for anchoring of the tyre to a corresponding mounting rim, and a tread band disposed crownwise to said carcass, intended for rolling contact of the tyre on the ground, characterized in that it has been vulcanized in a vulcanization mould comprising inner walls adapted to define the outer surface of said tyre being worked, wherein the material forming at least part of said inner walls is made of sintered powder particles.

18. A tyre for vehicle wheels according to claim 17, characterized in that the outer surface portion defined by said part of the inner walls consisting of a sintered powder comprises the surface of said tread band.

19. A tyre for vehicle wheels according to claim 18, characterized in that said tread band has a raised pattern defined by grooves and cuts produced in said band by corresponding surface projections (13, 14) and lamelliform elements (16) formed on said part of the inner wall consisting of sintered powder.

20. A tyre for vehicle wheels according to claim 17, characterized in that on at least one sidewall it has at least one raised portion defining a graphic element for tyre identification, which raised portion is generated by a corresponding cavity formed in a portion of said inner walls consisting of a sintered powder.

21. A tyre for vehicle wheels according to claim 17, characterized in that at least part of its outer surface is debossed.

22. A method of producing tyres for vehicle wheels by a vulcanization mould comprising inner walls provided with projections (13, 14) and/or surface cavities adapted to define corresponding cavities and/or projections on a tyre being worked, characterized by the use of a mould in which the material forming at least part of said inner walls consists of sintered powder particles mutually bonded together.

23. A production method according to claim 22, characterized by the use of a mould carrying out air venting through intercommunicating cavities which are alternated with the points of mutual junction of said sintered powder particles, so as to make tyres substantially free from sprues.

24. A production method according to claim 22, characterized by the use of a mould comprising at least one portion made by sintering powder of ceramic material.

25. A production method according to claim 24, characterized by the fact that the heat-supply step within the mould is carried out by microwaves and in different amounts at different areas of the tyre to be vulcanized.
